# EUROPÄISCHE PATENTANMELDUNG

(11) **EP 1 179 661 A2**
(43) Veröffentlichungstag der Anmeldung: **13.02.2002**
(21) Anmeldenummer: 01117333.3
(22) Anmeldetag: 18.07.2001
(51) Int. Cl.: F01P 11/18, G01F 23/64

(54) **Flüssigkeitsbehälter für Kraftfahrzeuge**

(30) Priorität: 10.08.2000 DE 10039018
(71) Anmelder: Bayerische Motoren Werke Aktiengesellschaft, 80809 München (DE); Solvay Automotive GmbH, 38667 Bad Harzburg (DE)
(72) Erfinder: Powollik, Wolfgang, 81549 München (DE); Scholz, Wolfgang, 38704 Liebenburg (DE); Schlösser, Harald, 38667 Bad Harzburg (DE); Bollmann, Ronald, 38690 Vienenburg (DE); Liekefeit, Klaus, 38259 Salzgitter (DE)

(57) **Zusammenfassung**

Flüssigkeitsbehälter (1) für Kraftfahrzeuge, mit einem zum Flüssigkeitsspiegel (2) weitgehend senkrecht angeordneten Führungselement (3) mit einem oberen Anschlag, wobei an einer Führungsfläche (4) des Führungselements (3) ein Schwimmer (6) zur Erkennung des Füllstandes geführt ist, wobei der obere Anschlag aus zumindest einem senkrecht zur Führungsachse (7) federnden Element (8, 8') besteht.
Diese Ausgestaltung der Füllstandanzeige erlaubt eine preiswerte Herstellung und eine kostengünstige und einfache Montage des Schwimmers.

## Beschreibung

Die Erfindung betrifft einen Flüssigkeitsbehälter für Kraftfahrzeuge gemäß der im Oberbegriff des Patentanspruchs 1 genannten Art.

Die Erfindung geht aus von der DE 32 36 809 A1. In dieser ist ein Kühlwasserbehälter aus thermoplastischem Material für Kraftfahrzeuge beschrieben. In dem Hohlraum des Kühlwasserbehälters befindet sich eine als zylindrischer Dorn ausgebildete Führung für einen Schwimmer. Der Schwimmer schwimmt auf dem Flüssigkeitsspiegel und schlägt bei einer definierten Füllhöhe in dem Kühlwasserbehälter gegen einen pilzförmigen oberen Anschlag an. Bei dem Zusammenbau des Kühlwasserbehälters wird zuerst der Schwimmer über den zylindrischen Dorn gesteckt und anschließend wird der pilzförmige obere Anschlag in den zylindrischen Dorn eingepresst. Hierfür verfügt der zylindrische Dorn über ein Sackloch am oberen Ende. Nach der Montage der Füllstandanzeige kann in den Kühlwasserbehälter Kühlmittel eingefüllt werden.

Nachteilig an dieser Lösung ist der Montageaufwand für den pilzförmigen oberen Anschlag in den zylindrischen Dorn.

Der Erfindung liegt die Aufgabe zugrunde, eine Füllstandanzeige aufzuzeigen, die preiswert in der Herstellung und darüberhinaus einfach zu fertigen ist.

Diese Aufgabe wird erfindungsgemäß von den Kennzeichen des Patentanspruchs 1 gelöst.

Diese Konstruktion gestattet eine einfache Montage des Schwimmers der Füllstandanzeige im Flüssigkeitsbehälter. Bei der Montage wird der Schwimmer über das federnde Element auf die Führungsfläche des Führungselements geschoben. Nachdem der Schwimmer über das federnde Element hinweg geschoben ist, federt dieses wieder in seiner Ausgangslage zurück und bildet den oberen Anschlag ohne dass weitere Montageschritte durchzuführen sind.

Nach Anspruch 2 wird die Montage des Schwimmers auf dem Führungselement deutlich erleichtert. Durch die Schlupffase wird der Schwimmer bei der Montage zuerst über dem Führungselement zentriert und gleitet anschließend leicht und ohne großen Kraftaufwand über das federnde Element auf die Führungsfläche des Führungselements.

Gemäß Anspruch 3 bildet das federnde Element im entspannten Zustand den oberen Anschlag. Zusätzliche Maßnahmen zur Bildung eines oberen Anschlags sind nicht nötig.

Nach Anspruch 4 wird der Schwimmer bei der Fertigung in einem einzigen Arbeitsschritt auf die Führungsfläche des Führungselements aufgeschoben. Somit ist eine einfache und rationelle Fertigung der Füllstandanzeige möglich.

Die einstückige Fertigung des federnden Elements mit dem Führungselement nach Anspruch 5 senkt nochmals die Herstellkosten für den Flüssigkeitsbehälter. Es wird ein kompletter Arbeitsgang, die Montage des oberen Anschlags auf das Führungselement, eingespart. Auch die separate Fertigung eines federnden Elements als Einzelbauteil entfällt und senkt die Herstellkosten.

Die Fertigung nach Anspruch 6 ist die schnellste, einfachste und wirtschaftlichste Art der Herstellung. Der einzige noch verbleibende Arbeitsgang zur Fertigstellung der Füllstandanzeige ist das Aufstecken des Schwimmers auf das Führungselement.

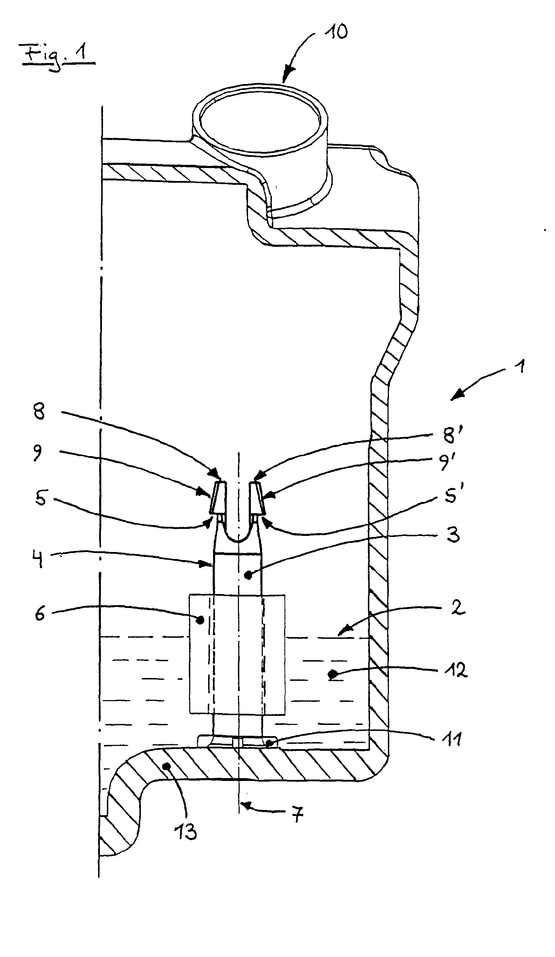

Figur 1 zeigt ein bevorzugtes Ausführungsbeispiel der Erfindung.

In Figur 1 ist ein Schnitt durch einen Teil eines Flüssigkeitsbehälters 1 mit einer Einfüllöffnung 10 und dem Blick auf eine Füllstandanzeige dargestellt. Die Füllstandanzeige im Hohlraum des Flüssigkeitsbehälters 1, auf einem Absatz 13 angeformt, besteht aus einem Führungselement 3 mit einer Führungsfläche 4 und einer Führungsachse 7, einen Schwimmer 6, zwei federnden Elementen 8, 8' mit jeweils einer oberen Anschlagsfläche 5, 5' und jeweils einer Schlupffase 9, 9', sowie einem unteren Anschlag 11. Der Schwimmer 6 ist radial um die Führungsachse 7 angeordnet. Am Führungselement 3 sind die federnden Elemente 8, 8' an dem zur Einfüllöffnung 10 weisenden Ende und an dem zum Absatz 13 weisenden Ende der untere Anschlag 11 angeformt. Ein Flüssigkeitsspiegel 2 zeigt die Füllhöhe einer Flüssigkeit 12 in dem Flüssigkeitsbehälter 1 an.

Die Führungsachse 7 ist senkrecht zum Flüssigkeitsspiegel 2. Das Führungselement 3 mit der Form eines zylindrischen Dorns ist etwa doppelt so lang wie die Höhe des rohrförmigen Schwimmers 6. Die Länge des Führungselements 3 kann zwischen der 1,5 bis 10fachen Höhe des rohrförmigen Schwimmers 6 liegen. Die axiale Bohrung des Schwimmers 6 bildet mit der Führungsfläche 4 eine Spielpassung. An dieser gleitet der Schwimmer 6 in Richtung der Führungsachse 7, abhängig vom Füllstand der Flüssigkeit 12, auf und ab. Die Aufwärtsbewegung des Schwimmers 6 ist durch die oberen Anschlagsflächen 5, 5' begrenzt. Die oberen Anschlagsflächen 5, 5' sind jeweils eine, zur Führungsachse senkrecht ausgerichtete Außenfläche der federnden Elemente 8, 8'. Die federnden Elemente 8, 8' haben am Aussenumfang jeweils eine Schlupffase 9, 9' in Richtung unterem Anschlag 11. Die Schlupffase 9, 9' hat einen Schlupfwinkel zwischen 2° und 45° zur Führungsachse 7. Die federnden Elemente 8, 8' sind im Bereich der Führungsachse 7 freigeschnitten, damit diese in Richtung Führungsachse federn können. Im entspannten Zustand ragen die oberen Anschlagsflächen 5, 5' über die Führungsfläche 4.

Eine erste Hälfte des Flüssigkeitsbehälters 1 ist mit der Einfüllöffnung 10, dem Führungselement 3, den federnden Elementen 8, 8' sowie dem unteren Anschlag 11 einstückig aus einem thermoplastischen Kunststoff in einem Spritzgussverfahren gefertigt. Die zweite Hälfte des Flüssigkeitsbehälters 1 ist ebenfalls in einem Spritzgußverfahren aus dem gleichen Material gefertigt. Beide Hälften werden zu dem fertigen Flüssigkeitsbehälter 1 miteinander verschweißt.

In weiteren Ausführungsvarianten können metallische Werkstoffe verwendet werden, auch in Kombinationen mit Kunststoff. In einer weiteren Ausgestaltungsvariante sind der Flüssigkeitsbehälter 1 und das Führungselement 3 als separate Bauelemente ausgeführt, die bei der Montage formschlüssig oder kraftschlüssig miteinander verbunden werden.

Der Schwimmer 6 besteht aus einem Kunststoff, dessen spezifisches Gewicht kleiner als das der Flüssigkeit 12 ist. In anderen Ausgestaltungsvarianten kann der Schwimmer 6 beispielsweise auch ein hohlgeblasenes Bauelement sein.

Nach der Fertigung der zwei Hälften des Flüssigkeitsbehälters 1, eine Hälfte mit Einfüllöffnung 10, unterem Absatz 11, Führungselement 3 und federnden Elementen 8, 8', folgt die Montage des separat hergestellten Schwimmers 6 auf das Führungselement 3. Hierbei wird der Schwimmer 6 mit seiner Bohrung über die federnden Elemente 8, 8' geschoben. Die Bohrungswandung des Schwimmers 6 übt auf die Schlupffasen 9, 9' eine Kraft auf die federnden Elemente 8, 8' in Richtung Führungsachse 7 aus und deformiert diese elastisch in Richtung Führungsachse 7, so dass der Schwimmer 6 mit seiner ganzen Länge über die federnden Elemente 8, 8' geschoben werden kann. Ist der Schwimmer 6 mit seiner ganzen Länge über die federnden Elemente 8, 8' geschoben, federn diese in ihre Ausgangslage, die entspannte Lage, zurück und die oberen Anschlagsflächen 5, 5' ragen über die Führungsfläche 4. Der Schwimmer 6 ist nun durch das Führungselement 3 zwischen den oberen Anschlagsflächen 5, 5' und dem unteren Anschlag 11 zwangsgeführt. Im Anschluss daran werden wie bereits erwähnt die zwei Hälften des Flüssigkeitsbehälters 1 miteinander verschweißt.

In einer anderen Ausgestaltungsvariante, wird der Flüssigkeitsbehälter 1 komplett mit der Einfüllöffnung 10, dem unterem Absatz 11, dem Führungselement 3 und den federnden Elementen 8, 8' einstückig in einem Hohlblasverfahren hergestellt. Nach der Herstellung folgt die Montage des separat hergestellten Schwimmers 6 auf das Führungselement 3, dessen größter Außendurchmesser kleiner als die lichte Weite der Einfüllöffnung 10 ist. Der Schwimmer 6 wird durch die Einfüllöffnung 10 in den Flüssigkeitsbehälter 1 eingeführt und anschließend wie bereits beschrieben auf das Führungselement 3 montiert.

Neben vielfältigen Variationen der Materialien kann auch die geometrische Anordnung der einzelnen Elemente geändert werden. So kann beispielsweise das Führungselement 3 als rohrförmiges Element ausgestaltet sein, in dessen Bohrung der Schwimmer 6 eingeführt wird. Die federnden Elemente 8, 8' befinden sich auch in diesem Fall wieder an dem Ende des Führungselements 3, an dem der Schwimmer 6 in die Bohrung, die gleichzeitig die Führungsfläche 4 darstellt, bei der Montage eingeführt wird.

### Bezugszeichenliste:

- 1: Flüssigkeitsbehälter
- 2: Flüssigkeitsspiegel
- 3: Führungselement
- 4: Führungsfläche
- 5, 5': obere Anschlagsfläche
- 6: Schwimmer
- 7: Führungsachse
- 8, 8': federndes Element
- 9, 9': Schlupffase
- 10: Einfüllöffnung
- 11: unterer Anschlag
- 12: Flüssigkeit
- 13: Absatz

## Patentansprüche

1. Flüssigkeitsbehälter für Kraftfahrzeuge, mit einem zum Flüssigkeitsspiegel weitgehend senkrecht angeordneten Führungselement mit einem oberen Anschlag, wobei an einer Führungsfläche des Führungselements ein Schwimmer zur Erkennung des Füllstandes geführt ist,
**dadurch gekennzeichnet, dass** der obere Anschlag aus zumindest einem senkrecht zur Führungsachse (7) federnden Element (8, 8') besteht.

2. Flüssigkeitsbehälter nach Anspruch 1,
**dadurch gekennzeichnet, dass** das federnde Element (8, 8') im entspannten Zustand eine Schlupffase (9, 9') in Richtung Führungselement (3) aufweist.

3. Flüssigkeitsbehälter nach Anspruch 1,
**dadurch gekennzeichnet, dass** das federnde Element (8, 8') im entspannten Zustand zumindest teilweise über die Führungsfläche (4) ragt.

4. Flüssigkeitsbehälter nach zumindest einem der zuvor genannten Ansprüche,
**dadurch gekennzeichnet, dass** der Schwimmer (6) über das federnde Element (8, 8') auf die Führungsfläche (4) aufschiebbar ist.

5. Flüssigkeitsbehälter nach zumindest einem der zuvor genannten Ansprüche,
**dadurch gekennzeichnet, dass** das federnde Element (8, 8') mit dem Führungselement (3) einstückig ist.

6. Flüssigkeitsbehälter nach zumindest einem der zuvor genannten Ansprüche,
**dadurch gekennzeichnet, dass** das Führungselement (3) und der Flüssigkeitsbehälter (1) einstückig sind.
